# EUROPEAN PATENT SPECIFICATION

(11) **EP 2 490 100 B1**
(45) Date of publication and mention of the grant of the patent: **15.10.2014**
(21) Application number: 11154292.4
(22) Date of filing: 14.02.2011
(51) Int. Cl.: G06F 1/32, G06F 13/14

(54) **Suspendable interrupts for processor idle management**
Suspendierbare Unterbrechungen zur Prozessorleerlaufverwaltung
Interruptions pouvant être suspendues pour gestion d'inactivité de processeur

(43) Date of publication of application: 22.08.2012
(73) Proprietor: 2236008 Ontario Inc., Waterloo, ON N2K 0A7 (CA)
(72) Inventor: Danko, Attilla, Ottawa Ontario K2M 1W8 (CA)
(74) Representative: Patel, Binesh

(56) References cited:
- EP-A1- 2 166 457
- US-B1- 7 478 186

## Description

### TECHNICAL FIELD

The following description relates to processor idle management and in particular to the use of interrupts.

### BACKGROUND

Power management in electronic devices, particularly portable electronic devices, is important when power resources such as battery life are limited. Processors used in electronic devices generally have two or more states in which they can operate. In a wake state the processor consumes power when executing software. In an idle state the processor performs minimal, if any, processing and consequently consumes less power which is useful in extending battery life. Processors may be switched between the wake and idle state for very short durations of time in an effort to conserve power when no processing tasks are required to be performed by the processor.

Operating systems (OS) allow multiple applications to be executed on a processor by scheduling the execution of the applications. If no applications require processing the OS may place the processor into the idle state. Before placing the processor into the idle state, the OS sets a time at which the processor is to switch to the wake state. The wake time may be set by the OS based on a periodic timer or may be set based on timers requested by an application or the OS.

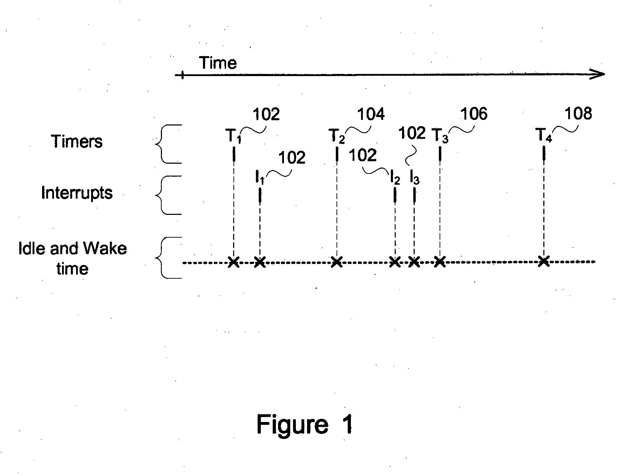

An interrupt can be associated with software or processing that is to be done when the interrupt occurs. Interrupts may be generated as a result of external events and as such the timing of their occurrence is unknown in advance. When an interrupt occurs, and the processor is in an idle state, the interrupt causes the processor to switch to the wake state to service the interrupt. Figure 1 depicts in a timeline the occurrence of timers T1, T2, T3, T4 as well as interrupts 11, 12, 13 and the associated switches between the idle state, which is represented by the dotted line, and wake state, represented by 'X'. In Figure 1, it is assumed for clarity that the processor returns to the idle state after switching to the wake state with minimal delay. As is apparent from Figure 1, each time a timer or an interrupt occur, the processor is switched from the idle state to the wake state.

It is desirable to have interrupts that enable an increase in the amount of time a processor spends in the idle state.

EP 2 166 457 A1 discloses methods of operation and interrupt controllers for generating interrupt signals to a unit, which could enter an active mode and a non-active mode, are disclosed. The interrupt controllers have interrupt logic adapted for receiving requests for interrupt, activity mode logic adapted for receiving information whether the unit is in non-active mode, and delay control logic adapted for delaying the interrupt to the unit when the received information indicates that the unit is in non-active mode.

US 7,478,186 B1 discloses a DMA interrupt coalescer processes interrupts received from a DMA channel of a DMA controller by transmitting an interrupt request to an interrupt controller if a coalescing condition is satisfied after receiving one or more delayable interrupts, or transmitting the interrupt request regardless of the satisfaction of the coalescing condition if a non-delayable interrupt is received. The coalescing condition is satisfied if a non-zero period of time has transpired since a first of the one or more delayable interrupts was received, or if a number of the one or more delayable interrupts received exceeds a programmed value.

### SUMMARY

In accordance with an aspect of the present disclosure there is provided method of extending a processor idle state in an electronic device, according to claim 1.

In accordance with an aspect of the present disclosure there is further provided an electronic device according to claim 8.

In accordance with an aspect of the present disclosure there is further provided a computer readable memory comprising instructions for extending a processor idle state in an electronic device, according to claim 15.

### BRIEF DESCRIPTION OF THE DRAWINGS

Embodiments are described herein with reference to the appended drawings, in which:
Figure 1 depicts in a timeline, the occurrence of timers as well as interrupts and the associated switches between the idle state and wake state;
Figure 2 depicts in a timeline, the occurrence of scheduled timer events and suspendable interrupts;
Figure 3 depicts in a further timeline, the occurrence of scheduled timer events and suspendable interrupts;
Figure 4 depicts in a flow chart, a method of operating a processor with suspendable interrupts;
Figure 5a depicts a timer schedule table and a suspendable interrupt table;
Figure 5b depicts in a timeline, the timers according to the timer schedule table of Figure 5a;
Figure 5c depicts in a further timeline, the timers according to the timer schedule table of Figure 5a and a received interrupt signal;
Figure 6 depicts in a flow chart, of a further method of operating a processor with suspendable interrupts; and
Figure 7 depicts in a block diagram an electronic device comprising a suspendable interrupt control.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein.

In broad terms, interrupts may be used in electronic devices in order to notify a piece of software, such as an interrupt handler, of the occurrence of an external event. The software may then service the interrupt by performing some associated processing as required. If an interrupt occurs while a processor is executing instructions for some software, the execution may be pre-empted and switched to the software associated with the interrupt. If the processor is in the idle state it may be switched to a wake state and the software associated with the interrupt can be executed. The forgoing description does not consider many well known details including different priority levels that may be used in determining whether currently executing software should be halted if an interrupt is received. Some details of interrupts that are well known are omitted from the current description in order to highlight features of suspendable interrupts.

An interrupt signal arrives at an interrupt controller, which is typically implemented in a hardware component and may form part of the processor or may be separate from the processor. The interrupt controller receives the interrupt signal and generates an interrupt request. The interrupt request notifies the operating system (OS) that the interrupt has occurred. Once the interrupt has been raised it may be handled by software associated with the interrupt.

If an interrupt request is raised white the processor is in an idle state the processor is placed in a wake state and the interrupt request is serviced as appropriate. That is, an associated interrupt handler may be invoked for further processing. It is possible to associate a mask state with an interrupt. The mask state may be used to temporarily ignore an interrupt signal. The mask state of an interrupt may be either masked or unmasked. When an interrupt is unmasked and the associated interrupt signal is received at the interrupt controller it is processed as described above, that is the processor is placed in the wake state if previously idle, the interrupt request is raised and serviced. When the interrupt is masked, and the interrupt signal is received, the interrupt controller does not raise the interrupt request until it is unmasked, at which time it is serviced as described above. As such, if the interrupt signal associated with a masked interrupt occurs while the processor is in the idle state, the processor is not switched to the wake state in order to service the interrupt. Rather, the processor remains in the idle state until it is placed in the wake state due to some other action, such as execution of a scheduled timer. Once the processor is in the wake state, the OS may unmask any masked interrupts and if the associated interrupt signal has been received, the associated interrupt requests are raised and serviced.

As described further herein suspendable interrupts may be used in order to maintain the processor in the idle state for a longer period of time, while still allowing interrupt requests to be serviced in an appropriate amount of time. The 'appropriate' amount of time for servicing an interrupt request can vary and may depend on, among other factors, what the interrupt is used for. A suspendable interrupt is associated with a maximum delay value which is a maximum time that the software associated with the suspendable interrupt can wait between the interrupt signal for the interrupt being received and the interrupt being raised for servicing. The suspendable interrupt can be associated with its maximum delay value in various ways. For example the OS can provide an application programming interface (API) that allows software to be attached to, or associated with, a particular interrupt signal. The software attached to the interrupt signal through the suspendable interrupt may specify an interrupt handler that should be executed when the associated interrupt request is raised. The API interface, in addition to allowing the interrupt handler to be specified also allows the software to specify the maximum delay value of the suspendable interrupt. If other software is already associated with the suspendable interrupt, and so a maximum delay value already specified, the OS may determine if the requested maximum delay value is less then the current maximum delay value, and if it is the maximum delay value can be changed to the smaller value in order to satisfy the requirements of all software associated with the suspendable interrupt. Furthermore, the API can allow the maximum delay value associated with a suspendable interrupt to be changed. By providing a maximum delay value it is possible to suspend the raising of the suspendable interrupt and allow the processor to remain in an idle state for a longer period of time. If the processor is in the idle state while the interrupt signal is received, it may not be necessary to place the processor in the wake state immediately. Rather, if the processor will be placed in the wake state for another reason, such as expiration of a timer, within an amount of time less than the maximum delay value the raising of the suspendable interrupt may be suspend until the processor is placed in the wake state. However, it is not possible to determine if the processor will be placed in the wake state within the maximum delay value when the interrupt signal is received since the calculations required to do so would require placing the processor in the wake state. As such, the mask states of suspendable interrupts are set, as either masked or unmasked, before the processor is placed in the idle state.

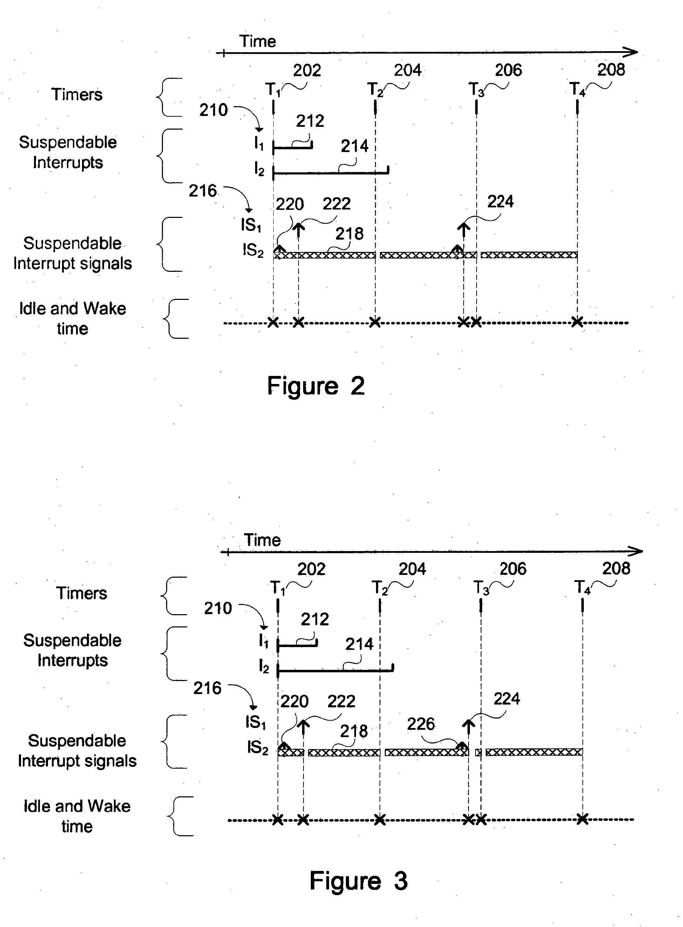

Figure 2 depicts a timeline of scheduled timer events and suspendable interrupts. The timers **202**, **204**, **206**, **208** are scheduled by the OS and will cause the processor to switch from the idle state to the wake state. Figures 2 and 3 also depict the suspendable interrupts **210** that have been defined as well as their associated maximum delay values. In particular, two suspendable interrupts l₁ and l₂ are depicted with respective maximum delay values **212**, **214** indicated. As is apparent from Figure 2, if an interrupt signal of suspendable interrupt l₁ is received right after the processor is placed into the idle state following expiration of timer **202**, the maximum delay value will not allow the suspendable interrupt l₁ from being suspended until the scheduled wake event **204**. In contrast, regardless of when an interrupt signal of suspendable interrupt l₂ is received, the maximum delay value **214** will extend past the time at which timer **204** is scheduled to place the processor in the wake state. As a result, the suspendable interrupt l₂ may be masked until the next scheduled time **204** the processor is placed in the wake state.

Each suspendable interrupt **210** is associated with an interrupt signal **216**. In particular suspendable interrupt 11 is associated with interrupt IS1 and particular suspendable interrupt 12 is associated with interrupt IS2. The suspendable interrupt l₁ is not masked and so when a corresponding interrupt signal IS1 is received, as indicated by arrow **222,** while the processor is in the idle state, the interrupt request for suspendable interrupt l₁ is raised and the processor is placed in the wake state in order to service the suspendable interrupt l₁. The suspendable interrupt l₂ is masked, depicted by cross-hatching **218,** and so when the interrupt signal IS2 is received, as indicated by arrow **220,** while the processor is in the idle state, the interrupt request for suspendable interrupt l₂ is masked until the processor is placed in the wake state as a result of timer **204** expiring.

As depicted, even when the interrupt signal IS2 is received at a time, represented by arrow **224,** that would allow it to be suspended until the processor is placed in the wake state due to timer **204** expiring within the maximum delay value, the interrupt request for suspendable interrupt l₁ is still raised, placing the processor in the wake state in order to service the suspendable interrupt l₁.

As described further herein, prior to placing the processor into the idle state the OS determines whether a suspendable interrupt should be masked until the next scheduled wake event. The masking of the suspendable interrupts is done on a worst-case scenario, assuming that the interrupt signal associated with the suspendable interrupt is received immediately after the processor is placed in the idle state. If it is possible to suspend raising the interrupt request for the worst case scenario, the suspendable interrupt is masked until the next scheduled wake event, otherwise the suspendable interrupt is unmasked.

Figure 3 is substantially similar to Figure 2. However, rather than waiting until the next scheduled wake time to raise a masked suspendable interrupt the masked suspendable interrupts are unmasked the next time the processor is placed in the wake state. As such, if the interrupt signal IS2 is received, at a time indicated by arrow **220,** it remains masked until the interrupt signal IS1 is received, at the time indicated by arrow **222,** and causes the processor to be placed in the wake state. Since interrupts are generally associated with processing that should be handled within a particular time frame, if multiple suspendable interrupts were suspended by their maximum delay value, when the processor is placed in the wake state there could be a backlog of suspendable interrupts, all of which have already been delayed by the maximum delay amount. When returning to the idle state after having serviced any raised interrupt requests associated with the suspendable interrupts, the OS again determines the masking state of each of the suspendable interrupts as described above utilizing the current time as the basis for the determination prior to proceeding to the idle state.

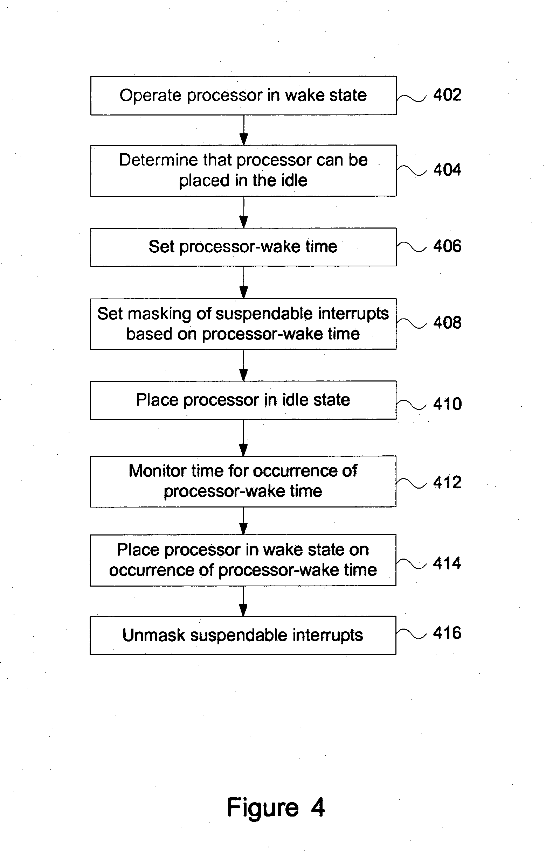

Figure 4 depicts a flow chart of a method of operating a processor with suspendable interrupts. The method **400** operates the processor in the wake state **(402).** When there is no software that requires processing, it is determined that the processor may be placed in the idle state **(404).** Once it is determined that the processor can be placed in the idle state, a processor wake time is set **(406).** The processor wake time can be set based on one or more scheduled timers. The timer that occurs the earliest is set as the processor wake time. Once the processor wake time is set, the masking state of each suspendable interrupt, which have an associated maximum-delay value, is set based on the processor wake time **(408).** For each suspendable interrupt, it is determined if the current time plus the time of the maximum delay value associated with the respective suspendable interrupt occurs after (e.g. is later than) the set processor wake time, and if it does, the suspendable interrupt can be suspended until the processor is placed in the wake state at the scheduled processor wake time and so the suspendable interrupt is masked. If the current time plus the time of the maximum delay value associated with the respective suspendable interrupt occurs before (e.g. is earlier than) the processor wake time, the interrupt cannot be suspended until the scheduled processor wake time and so it is unmasked. Once the mask states for the suspendable interrupts are set, the processor is placed in the idle state **(410).** In the idle state the processor performs minimal processing. A time, based on a clock signal, is monitored for the occurrence of the processor wake time **(412).** Once the processor wake time occurs the processor is placed in the wake state **(414).** When the processor is in the wake state, it should handle the suspendable interrupts when they are raised, and as such, all masked suspendable interrupts are unmasked **(416).** When the processor is to be placed into the idle state again, the mask states of each of the suspendable interrupts are again determined against a new scheduled processor wake time for the processor and set accordingly.

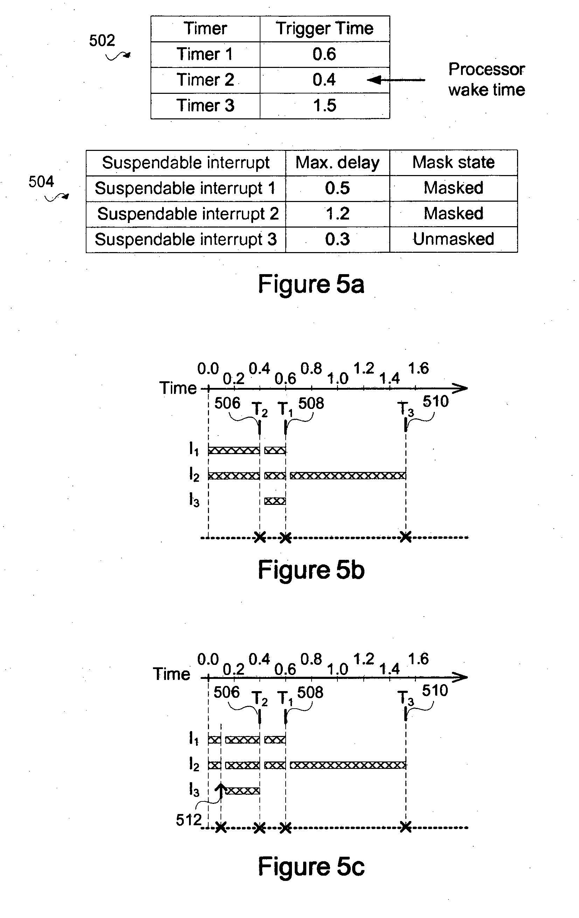

Figure 5a depicts a timer schedule table and a suspendable interrupt table. The timer schedule table **502** associates a trigger time with a respective timer. The scheduled timers may be specified at a periodic interval, or at times when software has requested a timer. Additionally, instead of specifying a specific triggering time, a timer may specify a time range during which the software associated with the timer may be triggered. Regardless of how the timer schedule is stored or specified, it is possible to determine a processor wake time based on the scheduled timers. In particular, the processor wake time will be set based on the earliest occurring timer that is required. As depicted in Figure 5a, the processor wake time is set to 0.4 based on the trigger time of timer 2.

The suspendable interrupt table **504** depicts three suspendable interrupts and their associated maximum delay values. The mask state of each of the suspendable interrupts is based on the processor wake time from the scheduled timers of table **502.** Since the processor wake time is 0.4 (assuming that the current time is 0) the current time plus the maximum delay value of both suspendable interrupts 1 and 2 occur after the processor wake time of 0.4. As such, both suspendable interrupts 1 and 2 are masked. The current time plus the maximum delay value of suspendable interrupt 3 is 0.3, which occurs before the processor wake time. As such, the suspendable interrupt 3 remains unmasked.

Figure 5b depicts a timeline of the timers according to the timer schedule of table **502.** Figure 5b assumes no interrupt signals are received. At time 0, the mask state of each suspendable interrupt l₁, l₂ and l₃ are as depicted in table **504.** At time 0.4 timer 2 expires **506,** resulting in the processor being placed in the wake state. Once the processor is in the wake state all of the suspendable interrupts may be unmasked. When the processor is placed back into the idle state, which for simplicity is depicted as happening instantly, a new processor wake time is set. Continuing with the timers of table **502,** the processor wake time would be set as 0.6, based on timer 1 **508.** Once the processor wake time is set, the masks of the suspendable interrupts are again determined. In this case, all suspendable interrupts I₁, I₂ and I₃ will be masked as depicted in Figure 5b. Similarly, once the processor is to be placed back into the idle state at time 0.6, the processor wake time is set as 1.5 **510** and the masks of the suspendable interrupts I₁, I₂ and I₃ determined. In this case, suspendable interrupt I₂ may be hindered long enough to guarantee that regardless of how soon the associated interrupt signal is received the interrupt can be suspended until timer 3 expires. As such suspendable interrupts 1 and 3 are unmasked and suspendable interrupt 2 is masked.

Figure 5c depicts the same initial arrangement as described above with reference to Figure 5b. However, at time 0.1 an interrupt signal **512** associated with suspendable interrupt 3 is received. Since suspendable interrupt 3 is unmasked, the processor is placed in the wake state and the interrupt request for suspendable interrupt 3 is raised serviced once the interrupt signal **512** is received. Once the processor is to be placed back into the idle state, the processor wake time, and the mask state of the suspendable interrupts I₁, I₂ and I₃ is again determined. As depicted, all of the suspendable interrupts I₁, I₂ and I₃ are masked. The processor wake time will be 0.4, and the current time will be 0.1. For each suspendable interrupt I₁, I₂ and I₃, the current time plus the maximum delay value will occur after, or at the same time as, the processor wake time. As such, all of the suspendable interrupts I₁, I₂ and I₃ can be masked, and if any interrupt signals are received, the handling of the associated interrupt can be suspended until the processor is placed in the wake state due to the timer T1 **508** expiring. Following expiration of the timer, the processor wake time and mask states for the suspendable interrupts will be determined as described above with Figure 5b.

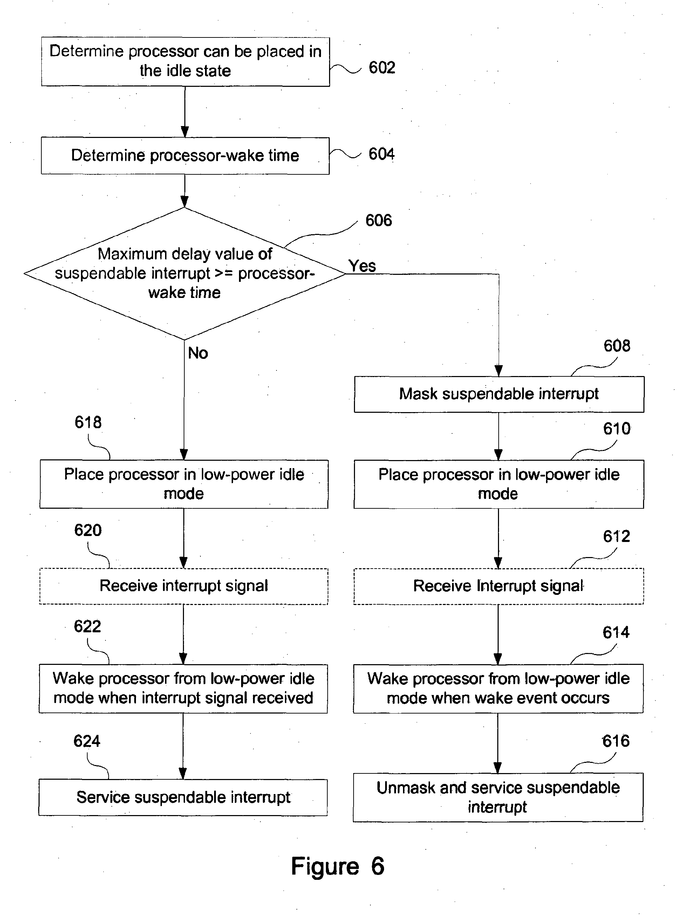

Figure 6 depicts a flow chart of a method of operating a processor in accordance with the suspendable interrupts described herein. The method **600** determines that the processor can be placed in the idle state **(602).** The determination that the processor can be placed in the idle state may be made in various ways. For example, the method may determine that there is no software currently running that requires processing by the processor. Additionally or alternatively, the determination may be made by receiving an indication that the processor can be placed in the idle state. The indication may be a direct indication to place the processor in the idle state, such as a function call that places the processor in the idle state. Regardless of how the determination that it is possible to place the processor in the idle state, once the determination is made and before placing the processor into the idle state, the method sets the processor wake time **(604)** based on scheduled timers. The processor wake time sets the time the processor will be placed into the wake state, assuming no interrupt signals are received. Once the processor wake time is set, a suspendable interrupt is checked to determine if it can be masked. The current time plus the maximum delay time of the suspendable interrupt is checked against the set processor wake time to see if the sum occurs after, or at the same time as, the set processor wake time **(606).** In Figure 6 the 'greater than' sign is used for brevity in place of 'occurs after'. If the current time plus the maximum delay value of the suspendable interrupt does occur after the set processor wake time (Yes at **606),** the suspendable interrupt is masked **(608)** and the processor is placed in the idle state **(610).** At some time before the processor wake time, an interrupt signal associated with the suspendable interrupt may be received **(612).** Since the suspendable interrupt is masked, the raising of the associated interrupt request and servicing of the suspendable interrupt is suspended. Once the processor wake time occurs, the processor is placed in the wake state **(614)** and the suspendable interrupt is unmasked **(616)** resulting in the interrupt request for the suspendable interrupt being raised, if the interrupt signal was received at **612,** and serviced.

If it is determined that the current time plus the maximum delay value occurs before the processor wake time (No at **606),** the suspendable interrupt is unmasked **(618)** and the processor placed in the idle state. At some time before the processor wake time, the interrupt signal associated with the suspendable interrupts may be received **(620).** Since the suspendable interrupt is unmasked, the processor is placed in the wake state **(622)** if the interrupt signal was received at **620.** Once in the wake state the interrupt request for the suspendable interrupt is raised and serviced **(624).**

Figure 6 describes a method of operating a processor in accordance with a single suspendable interrupt. Multiple suspendable interrupts may be used. If multiple suspendable interrupts are used, after setting the processor wake time, the respective mask state of each of the multiple suspendable interrupts is set and then the processor placed in the idle state.

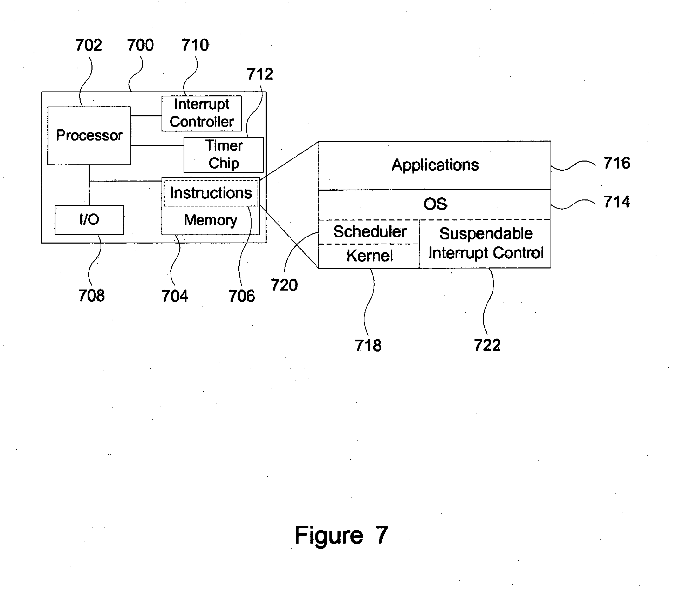

Figure 7 depicts in a block diagram an electronic device in which the suspendable interrupts described herein are implemented. The electronic device **700** may be handheld battery powered device using one or more processors such as for example a mobile phone, smart-phone, tablet device, laptop, or net-top computer. Although the illustrative electronic device **700** is described as a handheld battery powered device, the suspendable interrupts may be used in alternative electronic devices including desktop computers, set-top boxes, routers etc. Regardless of the specific use for the electronic device **700,** it comprises a central processing unit **702** for executing instructions, a memory **704** for storing instructions **706** to be executed by the processing unit **702.** The electronic device **700** may also comprise one or more input/output (I/O) devices **708,** for example a display screen, a keyboard, a touch screen, a network interface or a wireless communication interface. The electronic device **700** further comprises an interrupt controller **710.** Although depicted separately from the processor **702** of the electronic device **700,** the interrupt controller **710** may be incorporated into the processor **702** or other chipset providing input/output controller functions. The device **700** further comprises a timer chip **712.** The timer chip **712** may generate, or receive from another source, timing pulses that are used as a time-base for the timers. The timer chip **712** may monitor the timing pulses and provide a wake signal, which may include for example an interrupt signal, at a time, such as the processor wake time. It is contemplated that the timer chip **712** could be incorporated into the processor **702** or combined with other components of the electronic device **700**.The instructions **706,** when executed by the processing unit **702,** provide various functionality to the electronic device **700,** including an OS **714** which can provide an environment for running applications **716.** The OS **714** may comprise a kernel **718** comprising core functionality of the OS **714.** The OS **714** may also comprise the suspendable interrupt control **722** providing the suspendable interrupt functionality described here. The suspendable interrupt control **722** may be a part of the kernel **718,** a part of the OS **714** apart from the kernel **718,** an application **716** running on the OS **714** or a combination thereof.

The description of the timers and suspendable interrupts has described placing the processor **702** into an idle state when there is no software requiring processing. The time and time ranges described with regards to the timers and interrupts has been described using an arbitrary time scale for clarity of the description. It is contemplated that the actual time scales used by timers and the maximum delay value of the suspendable interrupts will vary based on one or more of the precision of the timing provided by the timer chip **712,** the precision of the processor **702** or electronic device 700, the precision of time within the OS **712** and the requirements of the software associated with the suspendable interrupt.

'Software' has been described generally for clarity of the description with regards to the functioning of the suspendable interrupts. 'Software' is intended to include one or more applications **716** running on the OS **714,** the OS **714** itself, a portion of an application **716** or a portion of the OS **714** including the kernel **718** or scheduler **720** or other OS components, or other elements of the electronic device that can be executed on the processor **702.**

Individual applications **716,** portions of the applications **716,** or portions of the OS **714** may execute in a separate thread or process. Since a processor **702** may only process a limited number of threads or processes at a time, a component of the OS **714** typically forming part of the kernel **714** and referred to as a scheduler **720** is responsible for scheduling which process or thread will execute on the processor **702** at a particular time. The scheduler **720** may also be responsible for setting the processor wake time for the processor **702** and placing the processor **702** into the idle state. When the processor **702** returns to the wake state from the idle state, the scheduler **720** determines which of the processes or threads will be executed, including checking to determine if any suspendable interrupts occurred that need to be raised and handled.

A processor may comprise one or more processing cores that can each execute a process or thread independently from the other cores. A scheduler may assign a process or thread to execute on any of the processing cores at any point in the execution of the process or thread. Alternatively, a process or thread may be assigned to always execute on the same processing core. The scheduler may place the individual processing cores into the idle state independently.

Although the processor has been described as having two states, namely a wake state and an idle state, the tolerant timers may be applied to processor which may operate in more than two states. Furthermore, the suspendable interrupts may be combined with one or more types of interrupts provided by the OS. Regardless of the type of interrupt, the scheduler may determine and set, based on one or more parameters, such as for example a power mode of the electronic device, the processor-wake time and the mask state of interrupts based on available interrupt information.

Although the above discloses example methods, apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods and apparatus.

## Claims

1. A method of extending a processor idle state in an electronic device, the method comprising:
determining that the processor (702) can be placed into an idle state;
setting a processor-wake time based on a timer schedule (502);
masking an interrupt (210) having a maximum-delay value (212), when a current time plus the maximum-delay value occurs after the set processor-wake time; and
placing the processor (702) into the idle state.

2. The method of claim 1, wherein the maximum delay value defines a maximum acceptable time between receiving at an interrupt controller (710) an interrupt signal (216) associated with the interrupt (210) and servicing the interrupt.

3. The method of claim 1 or 2, further comprising:
setting a mask state for each interrupt of a plurality of interrupts (210), wherein the mask state of each interrupt is set as:
masked when a current time plus the respective maximum-delay value occurs after the processor-wake time; and
unmasked when a current time plus the respective maximum-delay value occurs before the processor-wake time.

4. The method of claim 3, further comprising changing the respective maximum-delay value associated with at least one of the plurality of interrupts (210).

5. The method of claim 3 or 4, further comprising:
monitoring a time based on a clock signal while the processor (702) is in the idle state;
receiving an interrupt signal (216) associated with an interrupt that is masked;
determining that the monitored time is equal to the processor-wake time;
placing the processor (702) in a wake state;
unmasking the interrupt that is masked; and
processing the interrupt associated with the received interrupt signal.

6. The method of claim 3 or 4, further comprising:
monitoring a time based on a clock signal while the processor (702) is in the idle state;
receiving an interrupt signal (216) associated with an interrupt that is unmasked;
placing the processor (702) in a wake state; and
processing the interrupt associated with the received interrupt signal.

7. The method of claim 5 or 6, further comprising:
unmasking any masked interrupt when the processor (702) is placed in the wake state;
processing any of the unmasked interrupts if an associated interrupt signal (216) has been received.

8. An electronic device (700) comprising:
a processor (702) executing instructions;
a memory (704) storing instructions (706) for execution by the processor (702), the instructions (706) when executed by the processor configuring the electronic device (700) to provide:
an operating system (714) for setting a processor-wake time, before the processor (702) is placed into an idle state, based on a timer schedule (502) and placing the processor (702) into the idle state; and
an interrupt control (722) for masking an interrupt (210) having a maximum-delay value (212), when a current time plus the maximum-delay value occurs after the set processor-wake time.

9. The electronic device of claim 8, wherein the maximum-delay value defines a maximum acceptable time between receiving at an interrupt controller (710) an interrupt signal (216) associated with the interrupt (210) and servicing the interrupt.

10. The electronic device of claim 8 or 9, the interrupt control is further for setting a mask state for each interrupt of a plurality of interrupts (210), wherein the mask state of each interrupt is set as:
masked when a current time plus the respective maximum-delay value occurs after the processor-wake time; and
unmasked when a current time plus the respective maximum-delay value occurs before the processor-wake time.

11. The electronic device of claim 10, wherein the operating system is further for changing the respective maximum-delay value associated with at least one of the plurality of interrupts (210).

12. The electronic device of claim 10 or 11, further comprising:
an interrupt controller (710) for receiving an interrupt (216) signal associate with an interrupt; and
a timer chip (712) for monitoring a time based on a clock signal while the processor (702) is in the idle state, determining that the monitored time is equal to the processor wake time and placing the processor (702) in a wake state when the processor wake time occurs,
wherein the processor (702) is placed in the wake state upon the interrupt controller (710) receiving, before the processor wake time, an interrupt signal 716 associated with an interrupt that is unmasked.

13. The electronic device of claim 10 or 11, further comprising:
an interrupt controller (710) for receiving an interrupt signal (716) associated with an interrupt and placing the processor (702) in a wake state; and
a timer chip (712) for monitoring a time based on a clock signal while the processor (702) is in the idle state, determining that the monitored time is equal to the processor wake time and placing the processor (702) in the wake state when the processor wake time occurs, and
wherein the interrupt controller (710) suspends placing the processor (702) in the wake state when the interrupt controller receives an interrupt signal (216) associated with an interrupt that is masked.

14. The electronic device of claim 12 or 13 , wherein the interrupt control (722) is further for:
unmasking any masked interrupt when the processor is placed in the wake state;
processing any of the unmasked interrupts if an interrupt signal associated with a respective interrupt has been received.

15. A computer readable memory comprising instructions for implementing in an electronic device a method of extending a processor idle state in an electronic device, the instructions according to any one of claims 1 to 8.

## Patentansprüche

1. Ein Verfahren zum Erweitern eines Prozessorleerlaufzustands in einer elektronischen Vorrichtung, wobei das Verfahren aufweist:
Bestimmen, dass der Prozessor (702) in einen Leerlaufzustand gesetzt werden kann;
Einstellen einer Prozessoraufweckzeit basierend auf einem Timer-Plan (502);
Maskieren einer Unterbrechung (210), die einen Maximalverzögerungswert (212) hat, wenn eine aktuelle Uhrzeit plus der Maximalverzögerungswert nach der eingestellten Prozessoraufweckzeit eintritt; und
Setzen des Prozessors (702) in den Leerlaufzustand.

2. Das Verfahren gemäß Anspruch 1, wobei der Maximalverzögerungswert eine maximal akzeptable Zeitdauer zwischen einem Empfangen eines Unterbrechungssignals (216), das mit der Unterbrechung (210) assoziiert ist, an einer Unterbrechungs-Steuervorrichtung (710) und einem Bedienen der Unterbrechung definiert.

3. Das Verfahren gemäß Anspruch 1 oder 2, das weiter aufweist:
Einstellen eines Maskieren-Zustands für jede Unterbrechung einer Vielzahl von Unterbrechungen (210), wobei der Maskieren-Zustand jeder Unterbrechung gesetzt ist als:
maskiert, wenn eine aktuelle Uhrzeit plus der jeweilige Maximalverzögerungswert nach der Prozessoraufweckzeit eintritt; und
nicht-maskiert, wenn eine aktuelle Uhrzeit plus der jeweilige Maximalverzögerungswert vor der Prozessoraufweckzeit eintritt.

4. Das Verfahren gemäß Anspruch 3, das weiter aufweist ein Ändern des jeweiligen Maximalverzögerungswerts, der mit zumindest einer der Vielzahl von Unterbrechungen (210) assoziiert ist.

5. Das Verfahren gemäß Anspruch 3 oder 4, das weiter aufweist:
Überwachen einer Uhrzeit basierend auf einem Taktsignal, während der Prozessor (702) in dem Leerlaufzustand ist;
Empfangen eines Unterbrechungssignals (216), das mit einer Unterbrechung assoziiert ist, die maskiert ist;
Bestimmen, dass die überwachte Uhrzeit gleich der Prozessoraufweckzeit ist;
Setzen des Prozessors (702) in einen Wach-Zustand;
Demaskieren der Unterbrechung, die maskiert ist; und
Verarbeiten der Unterbrechung, die mit dem empfangenen Unterbrechungssignal assoziiert ist.

6. Das Verfahren gemäß Anspruch 3 oder 4, das weiter aufweist:
Überwachen einer Uhrzeit basierend auf einem Taktsignal, während der Prozessor (702) in dem Leerlaufzustand ist;
Empfangen eines Unterbrechungssignals (216), das mit einer Unterbrechung assoziiert ist, die nicht-maskiert ist;
Setzen des Prozessors (702) in einen Wach-Zustand; und
Verarbeiten der Unterbrechung, die mit dem empfangenen Unterbrechungssignal assoziiert ist.

7. Das Verfahren gemäß Anspruch 5 oder 6, das weiter aufweist:
Demaskieren einer maskierten Unterbrechung, wenn der Prozessor (702) in den Wach-Zustand gesetzt ist;
Verarbeiten von nicht-maskierten Unterbrechungen, wenn ein assoziiertes Unterbrechungssignal (216) empfangen wurde.

8. Eine elektronische Vorrichtung (700), die aufweist:
einen Prozessor (702), der Anweisungen ausführt;
einen Speicher (704), der Anweisungen (706) speichert zur Ausführung durch den Prozessor (702), wobei die Anweisungen (706) bei Ausführung durch den Prozessor (702) die elektronische Vorrichtung (700) konfigurieren, vorzusehen:
ein Betriebssystem (714) zum Einstellen einer Prozessoraufweckzeit, bevor der Prozessor (702) in einen Leerlaufzustand gesetzt wird,
basierend auf einem Timer-Plan (502) und Setzen des Prozessors (702) in den Leerlaufzustand; und
eine Unterbrechungs-Steuerung (722) zum Maskieren einer Unterbrechung (210), die einen Maximalverzögerungswert (212) hat, wenn eine aktuelle Uhrzeit plus der Maximalverzögerungswert nach der eingestellten Prozessoraufweckzeit eintritt.

9. Die elektronische Vorrichtung gemäß Anspruch 8, wobei der Maximalverzögerungswert eine maximal akzeptable Zeitdauer zwischen einem Empfangen eines Unterbrechungssignals (216), das mit der Unterbrechung (210) assoziiert ist, an einer Unterbrechungs-Steuervorrichtung (710) und einem Bedienen der Unterbrechung definiert.

10. Die elektronische Vorrichtung gemäß Anspruch 8 oder 9, wobei die Unterbrechungs-Steuerung weiter vorgesehen ist zum Einstellen eines Maskieren-Zustands für jede Unterbrechung einer Vielzahl von Unterbrechungen (210), wobei der Maskieren-Zustand jeder Unterbrechung gesetzt ist als:
maskiert, wenn eine aktuelle Uhrzeit plus der jeweilige Maximalverzögerungswert nach der Prozessoraufweckzeit eintritt; und
nicht-maskiert, wenn eine aktuelle Uhrzeit plus der jeweilige Maximalverzögerungswert vor der Prozessoraufweckzeit eintritt.

11. Die elektronische Vorrichtung gemäß Anspruch 10, wobei das Betriebssystem weiter vorgesehen ist zum Ändern des jeweiligen Maximalverzögerungswerts, der mit zumindest einer der Vielzahl von Unterbrechungen (210) assoziiert ist.

12. Die elektronische Vorrichtung gemäß Anspruch 10 oder 11, die weiter aufweist:
eine Unterbrechungs-Steuervorrichtung (710) zum Empfangen eines Unterbrechungssignals (216), das mit einer Unterbrechung assoziiert ist; und
einen Timer-Chip (712) zum Überwachen einer Uhrzeit basierend auf einem Taktsignal, während der Prozessor (702) in dem Leerlaufzustand ist, Bestimmen, dass die überwachte Uhrzeit gleich der Prozessoraufweckzeit ist, und Setzen des Prozessors (702) in einen Wach-Zustand, wenn die Prozessoraufweckzeit eintritt,
wobei der Prozessor (702) in den Wach-Zustand gesetzt wird, wenn die Unterbrechungs-Steuervorrichtung (710) vor der Prozessoraufweckzeit ein Unterbrechungssignal 716 empfängt, das mit einer Unterbrechung assoziiert ist, die nicht-maskiert ist.

13. Die elektronische Vorrichtung gemäß Anspruch 10 oder 11, die weiter aufweist:
eine Unterbrechungs-Steuervorrichtung (710) zum Empfangen eines Unterbrechungssignals (716), das mit einer Unterbrechung assoziiert ist,
und Setzen des Prozessors (702) in einen Wach-Zustand; und
einen Timer-Chip (712) zum Überwachen einer Uhrzeit basierend auf einem Taktsignal, während der Prozessor (702) in dem Leerlaufzustand ist, Bestimmen, dass die überwachte Uhrzeit gleich der Prozessoraufweckzeit ist, und Setzen des Prozessors (702) in den Wach-Zustand, wenn die Prozessoraufweckzeit eintritt, und
wobei die Unterbrechungs-Steuervorrichtung (710) ein Setzen des Prozessors (702) in den Wach-Zustand aussetzt, wenn die Unterbrechungs-Steuervorrichtung ein Unterbrechungssignal (216) empfängt, das mit einer Unterbrechung assoziiert ist, die maskiert ist.

14. Die elektronische Vorrichtung gemäß Anspruch 12 oder 13, wobei die Unterbrechungs-Steuerung (722) weiter vorgesehen ist zum:
Demaskieren einer maskierten Unterbrechung, wenn der Prozessor in den Wach-Zustand gesetzt ist;
Verarbeiten von nicht-maskierten Unterbrechungen, wenn ein Unterbrechungs-Signal, das mit einer jeweiligen Unterbrechung assoziiert ist, empfangen wurde.

15. Computerlesbarer Speicher, der Anweisungen zum Implementieren, in einer elektronischen Vorrichtung, eines Verfahrens zum Erweitern eines Prozessorleerlaufzustands in einer elektronischen Vorrichtung aufweist, wobei die Anweisungen gemäß einem der Ansprüche 1 bis 8 sind.

## Revendications

1. Procédé d'extension d'un état inactif d'un processeur dans un dispositif électronique, le procédé consistant à :
déterminer que le processeur (702) peut être placé dans un état inactif ;
fixer un instant de réveil de processeur sur la base d'une planification de registre d'horloge (502) ;
masquer une interruption (210) ayant une valeur de retard maximum (212), lorsqu'un instant actuel plus la valeur de retard maximum apparaît après l'instant de réveil de processeur fixé ; et
placer le processeur (702) dans l'état inactif.

2. Procédé selon la revendication 1, dans lequel la valeur de retard maximum définit un temps acceptable maximum entre la réception, au niveau d'un contrôleur d'interruption (710), d'un signal d'interruption (216) associé à l'interruption (210) et le service de l'interruption.

3. Procédé selon la revendication 1 ou 2 consistant en outre à :
fixer un état de masquage pour chaque interruption d'une pluralité d'interruptions (210), l'état de masquage de chaque interruption étant fixé comme étant :
masqué lorsqu'un instant actuel plus la valeur de retard maximum respective apparaît après l'instant de réveil de processeur ; et
non masqué lorsqu'un instant actuel plus la valeur de retard maximum respective apparaît avant l'instant de réveil de processeur.

4. Procédé selon la revendication 3, consistant en outre à modifier la valeur de retard maximum respective associée à au moins l'une de la pluralité d'interruptions (210).

5. Procédé selon la revendication 3 ou 4, consistant en outre à :
surveiller un temps sur la base d'un signal d'horloge alors que le processeur (702) est dans l'état inactif ;
recevoir un signal d'interruption (216) associé à une interruption qui est masquée ;
déterminer que le temps surveillé est égal à l'instant de réveil de processeur ;
placer le processeur (702) dans un état de réveil ;
annuler le masquage de l'interruption qui est masquée ; et
traiter l'interruption associée au signal d'interruption reçu.

6. Procédé selon la revendication 3 ou 4, consistant en outre à :
surveiller un temps sur la base d'un signal d'horloge alors que le processeur (702) est dans l'état inactif ;
recevoir un signal d'interruption (216) associé à une interruption qui n'est pas masquée ;
placer le processeur (702) dans un état de réveil ; et
traiter l'interruption associée au signal d'interruption reçu.

7. Procédé selon la revendication 5 ou 6, consistant en outre à :
annuler le masquage de toute interruption masquée lorsque le processeur (702) est placé dans l'état de réveil ;
traiter toutes les interruptions non masquées si un signal d'interruption (216) associé a été reçu.

8. Dispositif électronique (700) comprenant :
un processeur (702) exécutant des instructions ;
une mémoire (704) mémorisant des instructions (706) pour une exécution par le processeur (702), les instructions (706), lorsqu'elles sont exécutées par le processeur, configurant le dispositif électronique (700) pour fournir :
un système d'exploitation (714) pour fixer un instant de réveil de processeur, avant que le processeur (702) soit placé dans un état inactif, sur la base d'une planification de registre d'horloge (502) et pour placer le processeur (702) dans l'état inactif ; et
une commande d'interruption (722) pour masquer une interruption (210) ayant une valeur de retard maximum (212), lorsqu'un instant actuel plus la valeur de retard maximum apparaît après l'instant de réveil de processeur fixé.

9. Dispositif électronique selon la revendication 8, dans lequel la valeur de retard maximum définit un temps acceptable maximum entre la réception, au niveau d'un contrôleur d'interruption (710), d'un signal d'interruption (216) associé à l'interruption (210) et le service de l'interruption.

10. Dispositif électronique selon la revendication 8 ou 9, dans lequel la commande d'interruption sert en outre à fixer un état de masquage pour chaque interruption d'une pluralité d'interruptions (210), l'état de masquage de chaque interruption étant fixé comme étant :
masqué lorsqu'un instant actuel plus la valeur de retard maximum respective apparaît après l'instant de réveil de processeur ; et
non masqué lorsqu'un instant actuel plus la valeur de retard maximum respective apparaît avant l'instant de réveil de processeur.

11. Dispositif électronique selon la revendication 10, dans lequel le système d'exploitation sert en outre à modifier la valeur de retard maximum respective associée à au moins l'une de la pluralité d'interruptions (210).

12. Dispositif électronique selon la revendication 10 ou 11, comprenant en outre :
un contrôleur d'interruption (710) pour recevoir un signal d'interruption (216) associé à une interruption ; et
une puce de registre d'horloge (712) pour surveiller un temps sur la base d'un signal d'horloge alors que le processeur (702) est dans l'état inactif, déterminer que le temps surveillé est égal à l'instant de réveil de processeur et placer le processeur (702) dans un état de réveil lorsque l'instant de réveil de processeur apparaît,
dans lequel le processeur (702) est placé dans l'état de réveil lors de la réception par le contrôleur d'interruption (710), avant l'instant de réveil de processeur, d'un signal d'interruption (716) associé à une interruption qui n'est pas masquée.

13. Dispositif électronique selon la revendication 10 ou 11, comprenant en outre :
un contrôleur d'interruption (710) pour recevoir un signal d'interruption (716) associé à une interruption et placer le processeur (702) dans un état de réveil ; et
une puce de registre d'horloge (712) pour surveiller un temps sur la base d'un signal d'horloge alors que le processeur (702) est dans l'état inactif, déterminer que le temps surveillé est égal à l'instant de réveil de processeur et placer le processeur (702) dans l'état de réveil lorsque l'instant de réveil de processeur apparaît, et
dans lequel le contrôleur d'interruption (710) suspend le placement du processeur (702) dans l'état de réveil lorsque le contrôleur d'interruption reçoit un signal d'interruption (216) associé à une interruption qui est masquée.

14. Dispositif électronique selon la revendication 12 ou 13, dans lequel la commande d'interruption (722) sert en outre à :
annuler le masquage de toute interruption masquée lorsque le processeur est placé dans l'état de réveil ;
traiter toutes les interruptions non masquées si un signal d'interruption associé à une interruption respective a été reçu.

15. Mémoire pouvant être lue par un ordinateur comprenant des instructions pour exécuter, dans un dispositif électronique, un procédé d'extension d'un état inactif de processeur dans un dispositif électronique, les instructions étant selon l'une quelconque des revendications 1 à 8.
